# EUROPEAN PATENT SPECIFICATION

(11) **EP 2 128 010 B1**
(45) Date of publication and mention of the grant of the patent: **22.09.2010**
(21) Application number: 09155225.7
(22) Date of filing: 16.03.2009
(51) Int. Cl.: B62K 11/14, B62K 23/04

(54) **Vehicle having a throttle device**
Fahrzeug mit einer Drosselvorrichtung
Véhicule comportant un dispositif d'étranglement

(30) Priority: 27.05.2008 JP 2008137983
(43) Date of publication of application: 02.12.2009
(73) Proprietor: Honda Motor Co., Ltd., Minato-ku Tokyo 107-8556 (JP)
(72) Inventor: Kondo, Tetsuya c/o Honda R&D Co., Ltd., Saitama 351-0193 (JP); Nozoe, Koichi c/o Honda R&D Co., Ltd., Saitama 351-0193 (JP); Shimamura, Koichi c/oHonda R&D Co., Ltd., Saitama 351-0193 (JP)
(74) Representative: Liska, Horst

(56) References cited:
- EP-A- 0 759 393
- EP-A- 1 464 571
- DE-A1- 10 027 193
- US-A1- 2007 157 902

## Description

### Technical Field

The present invention relates to a vehicle comprising a throttle device in which a throttle pipe which is rotatably and pivotally supported on a handle bar and a throttle sensor unit which is housed in a throttle housing are engaged with each other by spline fitting so that the throttle device is assembled to the handle bar by sub-assembling the throttle sensor unit in the throttle pipe.

### Background Art

Conventionally, there has been known a throttle device which allows a rider to detect a throttle operation quantity by detecting a rotational angle of a throttle pipe which is rotatably inserted into a handle bar of a vehicle such as a motorcycle using a sensor.

Japanese Patent document JP-A-2003-252273 discloses a throttle device which mounts a ring on which a bevel gear is formed on an end portion of a throttle pipe, and includes a body to be detected by a sensor which is meshed with the bevel gear of the ring and is rotated in the direction substantially orthogonal to the rotational direction of the throttle pipe thus detecting a rotational angle of the body to be detected by a sensor.

Further, Japanese Utility Model Registration No. 2554808 discloses a throttle device which includes an annular potentiometer which is formed so as to wrap around a handle bar and, at the same time, engages a rotary member on which a movable contact of the potentiometer is formed with one end portion of a throttle pipe.

EP 1 464 571 A2 discloses a vehicle in accordance with the preamble of claim 1.

DE 100 27 193 A1, Fig. 5 discloses a throttle device comprising: a throttle pipe which is rotatably fitted on a handle bar of the vehicle; a throttle housing which is fixed to the handle bar and is engaged with an outer periphery of the throttle pipe; and a throttle sensor unit which is housed in the throttle housing and is adapted to detect a rotational angle of the throttle pipe, wherein the throttle device includes a throttle returning mechanism for applying a biasing force in the direction that the throttle pipe is made to return to an initial position thereof in which the engine output is decreased.

### Problems that the Invention is to Solve

However, the techniques disclosed in Japanese patent document JP-A-2003-252273 and Japanese Utility Model Registration No. 2554808 have a drawback that the number of parts is increased and the structure of the throttle device is liable to become complicated. Accordingly, with respect to the acquisition of the structure of the throttle device which can realize assembling operation with high efficiency while ensuring high sensor accuracy, these techniques are still less than optimal. Particularly, the conventional throttle device cannot be mounted on the handle bar after sub-assembling the throttle sensor unit in the throttle pipe.

The present invention has been made to overcome the above-mentioned drawbacks of the prior art, and it is an object of the present invention to provide a vehicle with a throttle device which can be assembled to a handle bar in a state that a throttle pipe which is rotatably and pivotally supported on the handle bar and a throttle sensor unit which is housed in a throttle housing are engaged with each other by spline fitting and the throttle sensor unit is sub-assembled to the throttle pipe.

### Means for Solving the Problem

To achieve the above-mentioned objects, the present invention provides a vehicle in accordance with claim 1.

Preferably, the throttle sensor unit and the throttle returning mechanism are arranged in an overlapping manner in the axial direction of the throttle pipe due to the engagement of a projection portion which is formed on the throttle returning mechanism and a recessed portion which is formed on the throttle sensor unit.

Preferably, the throttle sensor unit includes a rotary member in which the spline hole is formed, a detection part which is adapted to detect a quantity of rotation of the rotary member, and a sensor housing which houses the rotary member and the detection part and is mounted on the throttle housing in a non-rotatable manner.

Preferably, at least one handle switch is mounted on the throttle housing, the throttle sensor unit and the throttle returning mechanism are arranged on a vehicle-body outer side of the throttle housing, and the at least one handle switch is arranged on a vehicle-body center side of the throttle housing.

### Advantage of the Invention

According to a first aspect of the present invention, the spline is formed on the outer peripheral surface of one end portion of the throttle pipe in the axial direction, the throttle sensor unit is formed in an annular shape including the spline hole at a substantially center thereof, and the throttle pipe and the throttle sensor unit are engaged with each other by spline fitting and hence, the assembling operation of the throttle sensor unit and the throttle pipe can be easily performed and, at the same time, the throttle sensor unit and the throttle pipe can be simultaneously mounted on the handle bar in a state that both parts are assembled to each other. Accordingly, the assembling operation of the throttle device can be performed with high efficiency. Further, the throttle pipe and the throttle sensor unit are engaged with each other by spline fitting and hence, even when a force for moving the throttle pipe in the axial direction is applied to the throttle pipe, there is no possibility that the force is transmitted to the throttle sensor unit.

According to the present invention, the throttle device includes the throttle returning mechanism for applying a biasing force in the direction that the throttle pipe is made to return to an initial position thereof, and the throttle returning mechanism is arranged adjacent to the throttle sensor unit and is engaged with the throttle pipe by spline fitting and hence, the throttle sensor unit and the throttle returning mechanism can be mounted on the handle bar after simultaneously assembling these parts on the spline of the throttle pipe. Accordingly, the assembling operation of the throttle device can be performed with high efficiency.

According to a preferred aspect of the present invention, the throttle sensor unit and the throttle returning mechanism are arranged in an overlapping manner in the axial direction of the throttle pipe due to the engagement of a projection portion which is formed on the throttle returning mechanism and a recessed portion which is formed on the throttle sensor unit and hence, a total size consisting of a size of the throttle sensor unit and a size of the throttle returning mechanism in the axial direction can be reduced thus realizing the miniaturization of the throttle housing.

According to a preferred aspect of the present invention, the throttle sensor unit includes a rotary member in which the spline hole is formed, a detection part which detects a quantity of rotation of the rotary member, and a sensor housing which houses the rotary member and the detection part and is mounted on the throttle housing in a non-rotatable manner and hence, the throttle sensor unit and the throttle pipe can be simultaneously mounted on the handle bar by engaging these parts with each other by spline fitting after performing the assembling of the throttle sensor unit. Further, even when a force for moving the throttle pipe in the axial direction is applied to the throttle pipe, the force is not transmitted to the rotary member and hence, there exists no possibility that the force influences sensor accuracy of the detection part, the sealing property of the sensor housing and the like.

According to a preferred aspect of the present invention, at least one handle switch is mounted on the throttle housing, the throttle sensor and the throttle returning mechanism are arranged on a vehicle-body outer side of the throttle housing, and the handle switch is arranged on a vehicle-body center side of the throttle housing and hence, the handle switches can be mounted in the throttle housing by effectively utilizing the space in the inside of the throttle housing thus realizing the miniaturization of the throttle housing.

### Brief Description of the Drawings

Fig. 1 is a side view of a motorcycle which includes a throttle device according to one embodiment of the present invention.
Fig. 2 is a system constitutional view of an engine.
Fig. 3 is a front view of the throttle device.
Fig. 4 is a partially enlarged cross-sectional view of the throttle device in Fig. 3.
Fig. 5 is a cross-sectional view taken along a line A-A in Fig. 4.

### Best Mode for Carrying out the Invention

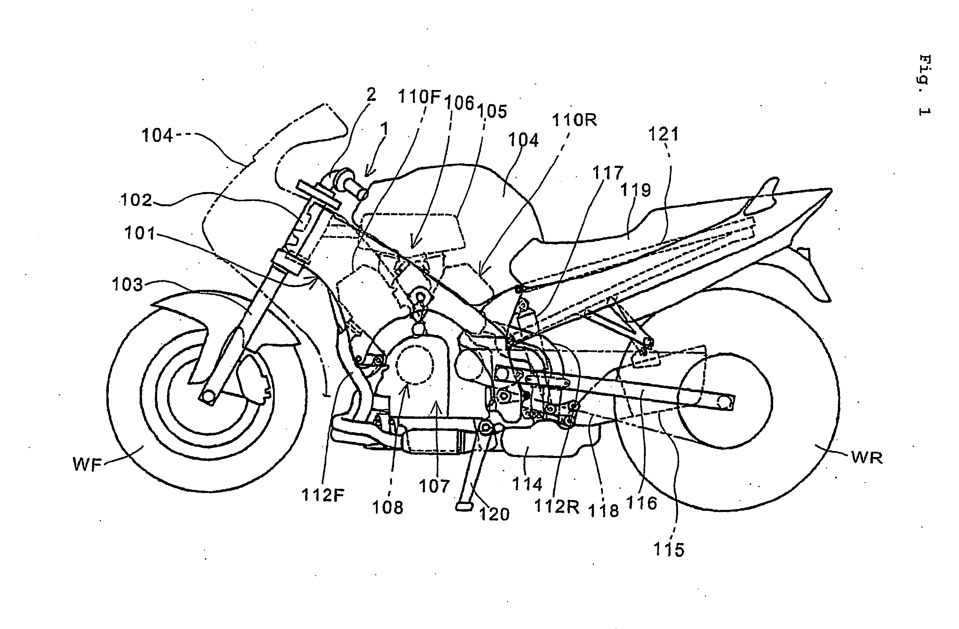

Hereinafter, a preferred embodiment of the present invention is explained in detail in conjunction with attached drawings. Fig. 1 is a side view of a motorcycle 100 which includes a throttle device 1 according to one embodiment of the present invention. On a vehicle-body front portion of a vehicle body frame 101, a head pipe 102 which steerably and pivotally supports a pair of left and right front forks 103 is formed. On the front forks 103, a front wheel WF is rotatably and pivotally supported, and the front wheel WF can be steered by a handle bar 2 which is mounted on upper end portions of the front forks 103. The throttle device 1 is mounted on a right side of the handle bar 2 which extends in the vehicle width direction.

An upper cover 104 is arranged on an upper portion of the vehicle body frame 101, and a vehicle-body front side of the head pipe 102 is covered with a cowling 104. On a lower portion of the vehicle body frame 101, a V-type 4-cylinder engine 107 which arranges a crankshaft 108 in the vehicle width direction is mounted. Inside the upper cover 104, in addition to a fuel tank not shown in the drawing, an air cleaner box 105, a fuel injection device 106 which supplies fuel to intake ports of a front cylinder 110F and a rear cylinder 110R of the engine 107 and the like are housed. An exhaust gas discharged from the front cylinder 110F is supplied to an expansion chamber 114 through a front exhaust pipe 112F, and an exhaust gas discharged from the rear cylinder 110R is supplied to the expansion chamber 114 through a rear exhaust pipe 112R. The exhaust gas which is supplied to the expansion chamber 114 is discharged to a rear side of the vehicle body by way of a muffler 115.

On a rear upper portion of the vehicle body frame 101, a seat frame 121 which supports a seat 119 thereon is mounted, while on a rear lower portion of the vehicle body frame 101, a swing arm 116 which rotatably and pivotally supports a rear wheel WR is swingably and pivotally supported. The swing arm 116 is suspended downwardly from the vehicle body frame 101 using a rear shock unit 117. A rotational drive force of the engine 107 is transmitted to the rear wheel WR by way of a drive chain 115. On the vehicle body frame 101 arranged below a swing axis of the swing arm 116, a side stand 120 which supports a vehicle body when the vehicle is stopped is mounted.

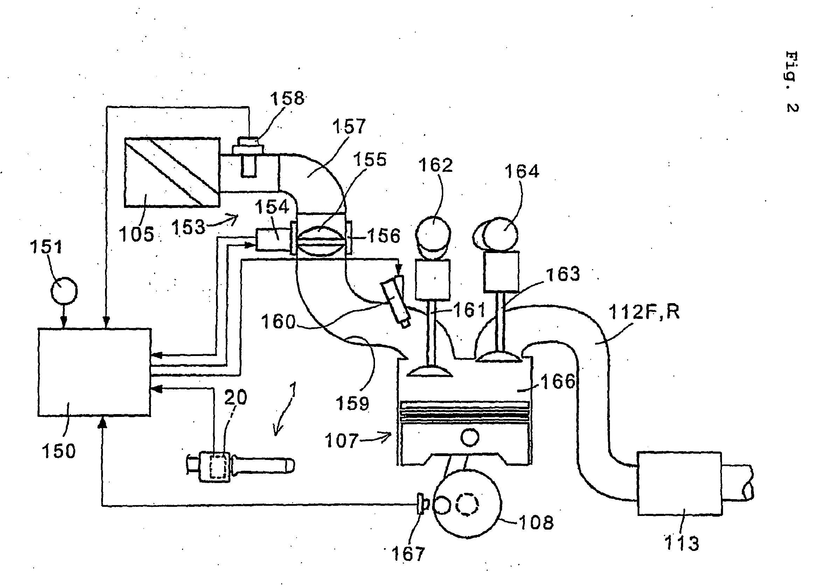

Fig. 2 is a system constitutional view of the engine 107. In an intake pipe 157 of the engine 107, an electronic control throttle 153 which opens and closes a throttle valve 155 using an actuator 154 is interposed, and air is sucked into the inside of combustion chambers 166 of the front and rear cylinders by way of the electronic control throttle 153 and an intake valve 161.

Exhaust gas is discharged from the combustion chamber 166 by way of an exhaust valve 163 and is purified by a catalyst device 113 and, thereafter, is discharged to atmosphere through the muffler 115. The intake valve 161 and the exhaust valve 163 are individually opened and closed by cams which are formed on an intake-side cam shaft 162 and an exhaustside cam shaft 164 respectively.

In an intake port 159 of each cylinder, an electromagnetic fuel injection valve 160 is mounted. When the fuel injection valve 160 is opened in response to an injection pulse signal, the fuel injection valve 160 injects fuel whose pressure is adjusted to a predetermined pressure toward the intake valve 161.

A control unit 150 which incorporates a micro computer therein systematically controls the electronic control throttle 153, the fuel injection valve 160, an ignition device not shown in the drawing and the like. Further, to the control unit 150, detection signals are inputted from various sensors such as an air flow meter 158 which detects a quantity of intake air into the engine 107, a throttle sensor unit (APS) 20 which detects a throttle opening of the throttle device 1, a crank angle sensor 167 which detects a rotational angle of the crankshaft 108, a throttle valve opening sensor 156 which detects an opening of the throttle valve 155, and a vehicle speed sensor 151 which detects a vehicle speed. Here, to the control unit 114, in addition to the detection signals from the various sensors, a battery voltage signal, a brake operation signal and the like are inputted. The control unit 150 controls driving of the electronic control throttle 153 in response to a throttle operation quantity of a rider and the signals from the various sensors.

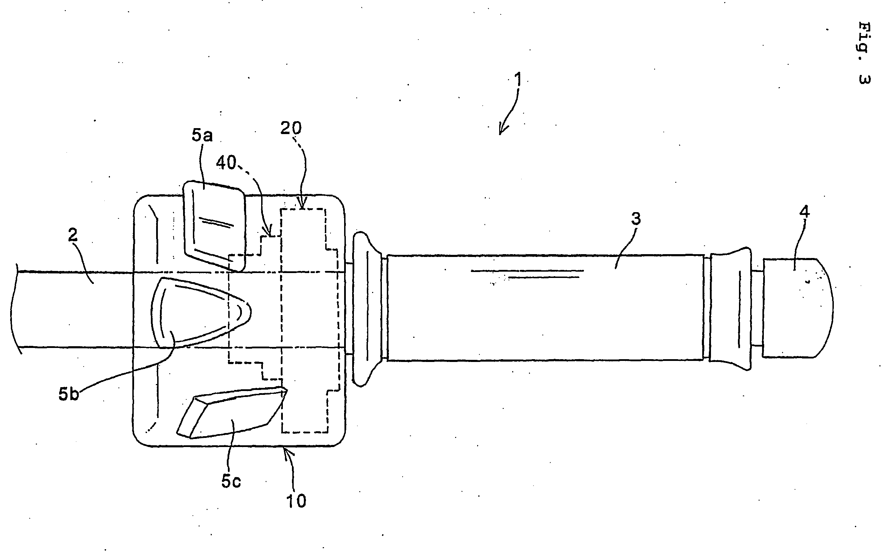

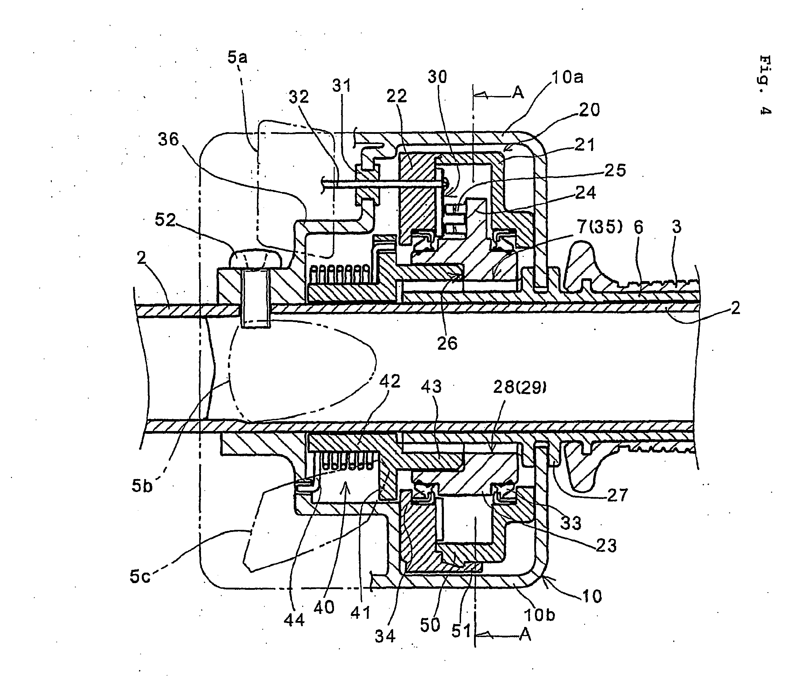

Fig. 3 is a front view of the throttle device 1. The throttle device 1 is mounted on a right end portion of the handle bar 2 which extends in the vehicle-width direction of the motorcycle and steers the front wheel. On the handle bar 2 formed of a metal-made pipe or the like, a substantially cylindrical throttle pipe 6 made of a resin or the like (see Fig. 4) is pivotally supported such that the throttle pipe 6 is rotatable within a range of predetermined angle. On an outer peripheral portion of the throttle pipe 6, a handle grip 3 which constitutes a grip portion made of rubber or the like is mounted. The rider of the vehicle can steer the front wheel by gripping the handle grip 3 and, at the same time, can arbitrarily adjust a rotational angle of the handle grip 3 relative to the handle bar 2 thus adjusting an output of the engine which constitutes a drive source of the vehicle.

Further, a substantially cylindrical throttle housing 10 which is made of a resin or the like is fixed to a portion of the handle bar 2 on a more vehicle-body center side than the handle grip 3. A plurality of handle switches is mounted on the throttle housing 10. The plurality of handle switches may include, for example, a seesaw-type kill switch 5a, a pushbutton-type hazard lamp switch 5b, and a starter switch 5c. The rider of the vehicle can manipulate the respective switches by extending his/her thumb in a state that the rider grips the handle grip 3 with his/her right hand.

In the inside of the throttle housing 10, a throttle sensor unit 20 which detects a rotational angle of the throttle pipe 6 and a throttle returning mechanism 40 which applies a biasing force in the direction so as to return the handle grip 3 to an initial position are housed. The handle grip 3 is rotatably held on the handle bar 2 within a range of a predetermined angle and, at the same time, is always biased in the direction toward the initial position, that is, in the direction that the engine output is decreased due to the throttle returning mechanism 40. Here, a grip end 4 is fixed to a right end portion of the handle bar 2.

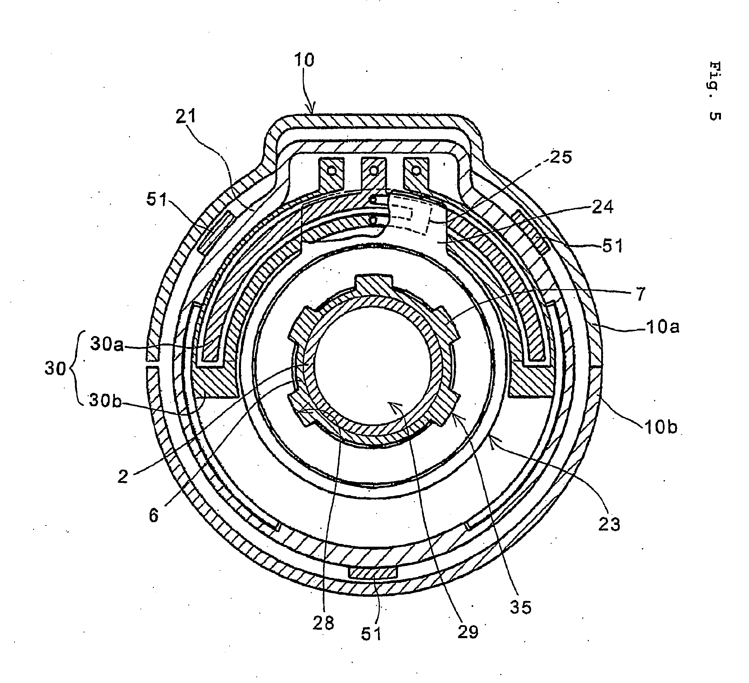

Fig. 4 is a partially enlarged cross-sectional view of the constitution shown in Fig. 3. Further, Fig. 5 is a cross-sectional view taken along a line A-A in Fig. 4. Symbols equal to the symbols used in the above-mentioned constitution indicate identical or similar parts. The throttle housing 10 includes an upper housing half body 10a and a lower housing half body 10b which are joined to each other using a plurality of screws (not shown in the drawing) or the like, and the upper housing half body 10a is fixed to the handle bar 2 using a positioning bolt 52.

Here, in the throttle housing 10 according to this embodiment, a partition wall 36 is formed between a space where the throttle sensor unit 20 and the throttle returning mechanism 40 are housed and a space where the handle switch is mounted. Due to such constitution, it is possible to enhance waterproof and dustproof property of the throttle sensor unit 20 and the throttle returning mechanism 40. However, the throttle housing 10 may be formed in various shapes and may be formed in a shape in which such a partition wall 36 is not arranged in the throttle housing 10.

A left end side of the throttle pipe 6 in the drawing is inserted into the throttle housing 10 so as to reach the substantially center of the throttle housing 10. Further, on the throttle pipe 6, an annular flange portion 27 which sandwiches a side wall of the throttle housing 10 is formed, and the throttle pipe 6 is held on the handle bar 2 in a non-movable manner in the axial direction by joining the upper housing half body 10a and the lower housing half body 10b to each other. Further, on a portion of an outer peripheral portion of the throttle pipe 6 on a more vehicle-body center side than the flange portion 27, a spline 35 consisting of five axial keys 7 is formed.

The throttle sensor unit 20 is formed of a resistance potentiometer. The throttle sensor unit 20 is formed in an annular shape and is fixed to an inner wall of the throttle housing 10. The throttle sensor unit 20 includes a rotary member 23 on which a movable contact 25 of the potentiometer is mounted, a base member 22 on which a fixed contact 30 of the potentiometer is mounted, and a cover member 21 which is engaged with the base member 22. The rotary member 23, the base member 22, and the cover member 21 are made of a resin or the like respectively.

The throttle sensor unit 20 is assembled such that sealing members 33, 34 formed of an oil seal or the like are engaged with both sides of the rotary member 23 in the axial direction and the rotary member 23 is sandwiched between the base member 22 and the cover member 21 from both sides of the rotary member 23. The base member 22 and the cover member 21 are fixed to each other by engaging an engaging pawl 50 which is formed on the cover member 21 with an engaging projection 51 which is formed on the base member 22 by fitting. Due to such constitution, the inside of the sensor in which the fixed contact 30 and the movable contact 25 are housed can ensure high waterproof and dustproof property. Here, shapes or the like of the engaging pawl 50 and the engaging projection 51 may be variously modified, and the base member 22 and the cover member 21 may be fixed to each other using fastening members such as screws. On a back side of the base member 22, a line 32 which is connected to the fixed contact 30 and outputs a sensor signal is mounted. The line 32 penetrates a packing member 31 made of rubber or the like and, thereafter, is guided to the outside of the partition wall 36.

Further, in the rotary member 23, a spline hole 29 having five key grooves 28 which agree with a spline shape (spline 35) of the throttle pipe 6 is formed. By engaging the throttle pipe 6 with the spline hole 29, the assembling of both of the throttle sensor unit 20 and the throttle pipe 6 is completed.

As described above, the throttle sensor unit 20 is formed as a module and hence, the assembling of the throttle sensor unit 20 and the throttle pipe 6 can be completed by merely engaging the throttle sensor 20 and the throttle pipe 6 by spline fitting whereby the assembling operation can be easily performed. Further, the throttle sensor 20 and the throttle pipe 6 can be simultaneously mounted on the handle bar 2 in a state that the throttle sensor unit 20 and the throttle pipe 6 are assembled to each other and hence, the efficiency of the assembling operation of the throttle device 1 can be enhanced. In this embodiment, the throttle sensor unit 20 and the throttle pipe 6 are firstly mounted on the handle bar 2 and, thereafter, the throttle housing 10 is mounted on the handle bar 2 so as to cover the throttle unit sensor 20 and the throttle pipe 6 from above and below.

In this embodiment, the movement of the throttle pipe 6 in the axial direction is restricted by the flange portion 27. However, for example, even when a slight gap is formed between the flange portion 27 and the wall portion of the throttle housing 10 so that the throttle pipe 6 may be allowed to move in the axial direction within a range of the gap, the throttle pipe 6 and the rotary member 23 are engaged with each other by spline fitting and hence, the axial movement of the throttle pipe 6 is not transmitted to the rotary member 23. Accordingly, it is possible to prevent the occurrence of a phenomenon that an axial force is applied to the rotary member 23 and influences the sensor accuracy and the sealing property and the like of the sensor housing.

The movable contact 25 and the fixed contact 30 which constitute the detection part for detecting a rotational angle of the throttle pipe 6 are formed of a conductive body made of metal or the like respectively. The movable contact 25 which is mounted on the projecting portion 24 of the rotary member 23 is brought into contact with the input-side fixed contact 30a and the output-side fixed contact 30b so as to electrically connect both contacts 30a, 30b with each other. A contact position of the movable contact 25 with both contacts 30a, 30b is changed along with the rotation of the throttle pipe 6 and hence, an output current value from the line 32 is changed. In this embodiment, the throttle device is configured to decrease an electric resistance value generated on the fixed contact 30 along with the rotation of the throttle pipe 6 in the counterclockwise direction in the drawing from an initial position of the throttle pipe 6 on a right side of the drawing.

Further, the throttle returning mechanism 40 which applies a biasing force in the direction of returning the throttle pipe 6 to the initial position is arranged adjacent to the throttle sensor unit 20 in the axial direction. A coil spring 44 is wound around a main body portion 42 of the throttle returning mechanism 40, and one end side of the coil spring 44 is engaged with the flange portion 41 and, at the same time, another end portion of the coil spring 44 is engaged with the partition wall 36 of the throttle housing 10. On a right side of the main body portion 42 in the drawing (see Fig. 4), a cylindrical projection 43 which is engaged with the throttle pipe 6 by spline fitting is formed. By inserting the projection 43 into the recessed portion 26 formed on the rotary member 23, the throttle returning mechanism 40 and the throttle sensor unit 20 are arranged to overlap with each other in the axial direction. Due to such constitution, the throttle returning mechanism 40 is arranged on a radially inner side of the throttle sensor unit 20 thus reducing an axial size of the throttle device whereby the miniaturization of the whole throttle device can be realized.

According to the above-mentioned constitution, the rotary member 23 of the throttle sensor unit 20 and the main body portion 42 of the throttle returning mechanism 40 can be simultaneously engaged with the end portion of the throttle pipe 6 by spline fitting in a state that the rotary member 23 and the main body portion 42 overlap each other in the axial direction. In this embodiment, inventors of the present invention have found that although it is difficult to reduce a thickness of the throttle device in the direction orthogonal to an axis of the throttle sensor unit 20 from a viewpoint of the sensor accuracy, a manufacturing cost and the like, these properties are not influenced even when an axial length of the rotary member 23 which is engaged with the throttle pipe 6 by spline fitting is shortened. Based on such finding, in this embodiment, the projection 43 of the throttle returning mechanism 40 is inserted into the recessed portion of the rotary member 23 which is acquired by such shortening thus reducing a total width consisting of a width of the throttle sensor unit 20 and a width of the throttle returning mechanism 40 in the axial direction. Accordingly, the throttle housing 10 can be miniaturized. Further, due to such constitution, the throttle returning mechanism 40, the throttle sensor unit 20 and the throttle pipe 6 can be simultaneously mounted on the handle bar 2 in a pre-assembled state and hence, the efficiency of the assembling operation of the throttle device 1 can be further enhanced.

Here, the respective structures or the shapes of the throttle sensor unit 20 and the throttle returning mechanism 40 are not limited to the above-mentioned embodiment, and various modifications are conceivable. For example, the rotary member 23 and the main body portion 42 of the throttle returning mechanism 40 may be formed as an integral part of the throttle device 1.

Further, in this embodiment, the throttle device is configured such that the throttle returning mechanism 40 and the throttle sensor unit 20 are arranged on a vehicle-body outer side (in the rightward direction in Fig. 4) and, at the same time, the handle switches 5a, 5b and 5c are arranged on a vehicle-body center side (in the leftward direction in Fig. 4) with respect to the throttle housing 10. Due to such an arrangement, the respective handle switches can be mounted in the throttle housing 10 by effectively utilizing the space in the inside of the throttle housing 10 thus realizing the miniaturization of the throttle housing 10.

Here, respective shapes and materials of the handle bar, the throttle pipe and the throttle housing, a shape of a spline shaft-shaped portion formed on the throttle pipe, constitutions of the throttle sensor unit and the throttle returning mechanism and the like are not limited to the above-mentioned constitutions and various modifications are conceivable. For example, as the sensor portion of the throttle sensor unit, a non-contact sensor using a Hall element may be adopted in place of the above-mentioned potentiometer. Further, on the throttle device, a friction means which applies a proper resistance to the rotational operation of the throttle pipe may be provided. The friction means is, for example, configured to utilize a slide resistance of a frictional body, and may be housed in the inside of the throttle housing.

The vehicle according to the present invention is not limited to the motorcycle, and may be applicable to a vehicle such as a three-wheeled vehicle or a four-wheeled vehicle which uses an engine or a motor as a drive source.

The invention provides a vehicle with a throttle device which can be assembled to a handle bar after sub-assembling a throttle pipe and a throttle sensor unit to each other.

A spline 35 is formed on an outer peripheral surface of one end portion of a throttle pipe 6 which is rotatably fitted on a handle bar 2 in the axial direction. A throttle sensor unit 20 which is housed in a throttle housing 10 includes a rotary member 23 in which a spline hole 29 is formed, a fixed contact 30 and a movable contact 25 which detect a quantity of rotation of the rotary member 23, and a sensor housing which is fixed to the throttle housing 10. The throttle pipe 6 and the throttle sensor unit 20 are mounted on the handle bar 20 after engaging these parts with each other by spline fitting. A throttle returning mechanism 40 and the sensor unit 20 are arranged in an overlapping manner in the axial direction by engaging a projection 43 and a recessed portion 26 with each other. Handle switches are arranged on the vehicle body center side of the throttle housing 10.

## Claims

1. A vehicle having a throttle device (1) comprising:
a throttle pipe (6) which is rotatably fitted on a handle bar (2) of the vehicle;
a throttle housing (10) which is fixed to the handle bar (2) and is rotatably engaged with an outer periphery of the throttle pipe (6); and
a throttle sensor unit (20) which is housed in the throttle housing (10) and is adapted to detect a rotational angle of the throttle pipe (6), wherein
a spline (35) is formed on an outer peripheral surface of one end portion of the throttle pipe (6) in the axial direction thereof,
the throttle sensor unit (20) is formed in an annular shape including a spline hole (29) at a substantially center thereof, and
the throttle pipe (6) and the throttle sensor unit (20) are engaged with each other by spline fitting,
wherein the throttle device (1) includes a throttle returning mechanism (40) for applying a biasing force to the throttle pipe (6) in the direction in which the throttle pipe (6) is made to return to an initial position thereof and in which the engine output is decreased,
**characterized in that**
the throttle returning mechanism (40) is arranged adjacent to the throttle sensor unit (20) in the axial direction of the throttle pipe (6) and is engaged with the throttle pipe (6) by spline fitting.

2. A vehicle according to claim 1, wherein the throttle sensor unit (20) and the throttle returning mechanism (40) are arranged in an overlapping manner in the axial direction of the throttle pipe (6) due to the engagement of a projection portion (43) which is formed on the throttle returning mechanism (40) and a recessed portion (26) which is formed on the throttle sensor unit (20).

3. A vehicle according to claim 1 or 2, wherein the throttle sensor unit (20) includes a rotary member (23) in which the spline hole (29) is formed, a detection part (25, 30) which is adapted to detect a quantity of rotation of the rotary member (23), and a sensor housing which houses the rotary member (23) and the detection part (25, 30) and is mounted on the throttle housing (10) in a non-rotatable manner.

4. A vehicle according to any one of claims 1 to 3, wherein at least one handle switch (5a, 5b, 5c) is mounted on the throttle housing (10),
the throttle sensor unit (20) and the throttle returning mechanism (40) are arranged on a vehicle-body outer side of the throttle housing (10), and
the at least one handle switch is arranged on a vehicle-body center side of the throttle housing (10).

## Patentansprüche

1. Fahrzeug mit einer Drosselvorrichtung (1) umfassend:
ein Drosselrohr (6), das drehbar auf eine Lenkstange (2) des Fahrzeugs aufgesetzt ist;
ein Drosselgehäuse (10), das an der Lenkstange (2) befestigt ist und
mit einem Außenumfang des Drosselrohrs (6) drehbar in Eingriff steht;
und
eine Drosselsensoreinheit (20), die in dem Drosselgehäuse (10) aufgenommen und dazu ausgelegt ist, einen Drehwinkel des Drosselrohrs (6) zu erfassen, worin
eine Längsverzahnung (35) an einer Außenumfangsfläche eines Endabschnitts des Drosselrohrs (6) in dessen axialer Richtung ausgebildet ist,
die Drosselsensoreinheit (20) in einer Ringform ausgebildet ist, die im Wesentlichen in ihrer Mitte ein Längsverzahnungsloch (29) enthält, und
das Drosselrohr (6) und die Drosselsensoreinheit (20) durch Längsverzahnungssitz miteinander in Eingriff stehen,
worin die Drosselvorrichtung (10) einen Drosselrückstellmechanismus (40) enthält, um eine Vorspannkraft auf das Drosselrohr (6) in der Richtung auszuüben, in der das Drosselrohr (6) zu seiner Anfangsstellung zurückgebracht wird und in der die Motorleistung verringert wird,
**dadurch gekennzeichnet, dass** der Drosselrückstellmechanismus (40) in der axialen Richtung des Drosselrohrs (6) in der Nähe der Drosselsensoreinheit (20) angeordnet ist und durch Längsverzahnungssitz mit dem Drosselrohr (6) in Eingriff steht.

2. Fahrzeug nach Anspruch 1, worin die Drosselsensoreinheit (20) und der Drosselrückstellmechanismus (40) in axialer Richtung des Drosselrohrs (6) überlappend angeordnet sind, aufgrund des Eingriffs eines Vorsprungabschnitts (43), der an dem Drosselrückstellmechanismus (40) ausgebildet ist, und eines Vertiefungsabschnitts (26), der an der Drosselsensoreinheit (20) ausgebildet ist.

3. Fahrzeug nach Anspruch 1 oder 2, worin die Drosselsensoreinheit (20) ein Drehelement (23), in dem das Längsverzahnungsloch (29) ausgebildet ist, ein Erfassungsteil (25, 30), das dazu ausgelegt ist, einen Drehbetrag des Drehelements (23) zu erfassen, sowie ein Sensorgehäuse, das das Drehelement (23) und das Erfassungsteil (25, 30) aufnimmt und an dem Drosselgehäuse (10) nicht drehbar angebracht ist, enthält.

4. Fahrzeug nach einem der Ansprüche 1 bis 3, worin zumindest ein Handschalter (5a, 5b, 5c) an dem Drosselgehäuse (10) angebracht ist, die Drosselsensoreinheit (20) und der Drosselrückstellmechanismus (40) an der Fahrzeugaufbau-Außenseite des Drosselgehäuses (10) angeordnet sind, und
der zumindest eine Handschalter an einer Fahrzeugaufbaumittelseite des Drosselgehäuses (10) angeordnet ist.

## Revendications

1. Véhicule comportant un dispositif de papillon (1) comprenant :
une poignée des gaz (6) qui est ajustée avec rotation sur un guidon (2) du véhicule ;
un logement de papillon (10) qui est fixé au guidon (2) et est en prise rotative avec une périphérie externe de la poignée des gaz (6) ; et
une unité de capteur de papillon (20) qui est logée dans le logement de papillon (10) et est adaptée pour détecter un angle de rotation de la poignée des gaz (6), dans lequel
une cannelure (35) est formée sur une surface périphérique externe d'une partie d'extrémité de la poignée des gaz (6) dans sa direction axiale,
l'unité de capteur de papillon (20) est formée dans une forme annulaire incluant un trou de cannelure (29) au niveau sensiblement de son centre, et
la poignée des gaz (6) et l'unité de capteur de papillon (20) sont en prise l'une avec l'autre par ajustement de cannelure,
dans lequel le dispositif de papillon (1) inclut un mécanisme de retour de papillon (40) pour appliquer une force de sollicitation à la poignée des gaz (6) dans la direction dans laquelle la poignée des gaz (6) est amenée à revenir à une position initiale de celle-ci et dans laquelle la puissance du moteur est diminuée,
**caractérisé en ce que**
le mécanisme de retour de papillon (40) est agencé de manière adjacente à l'unité de capteur de papillon (20) dans la direction axiale de la poignée des gaz (6) et est en prise avec la poignée des gaz (6) par ajustement de cannelure.

2. Véhicule selon la revendication 1, dans lequel l'unité de capteur de papillon (20) et le mécanisme de retour de papillon (40) sont agencés en chevauchement dans la direction axiale de la poignée des gaz (6) en raison de la mise en prise d'une partie en saillie (43) qui est formée sur le mécanisme de retour de papillon (40) et une partie évidée (26) qui est formée sur l'unité de capteur de papillon (20).

3. Véhicule selon la revendication 1 ou 2, dans lequel l'unité de capteur de papillon (20) inclut un organe rotatif (23) dans lequel le trou de cannelure (29) est formé, une partie de détection (25, 30) qui est adaptée pour détecter une quantité de rotation de l'organe rotatif (23), et un logement de capteur qui loge l'organe rotatif (23) et la partie de détection (25, 30) et est monté sur le logement de papillon (10) de façon non rotative.

4. Véhicule selon l'une quelconque des revendications 1 à 3, dans lequel au moins un interrupteur de guidon (5a, 5b, 5c) est monté sur le logement de papillon (10),
l'unité de capteur de papillon (20) et le mécanisme de retour de papillon (40) sont agencés sur un côté externe de carrosserie de véhicule du logement de papillon (10), et
au moins un interrupteur de guidon est agencé sur un côté central de carrosserie de véhicule du logement de papillon (10).
